# EUROPÄISCHE PATENTSCHRIFT

(11) **EP 0 441 929 B1**
(45) Veröffentlichungstag und Bekanntmachung des Hinweises auf die Patenterteilung: **05.01.1994**
(21) Anmeldenummer: 90912680.7
(22) Anmeldetag: 29.08.1990
(51) Int. Cl.: B29C 47/06, B29C 47/04, B29C 47/14

(54) **VORRICHTUNG ZUM EXTRUDIEREN VON KUNSTSTOFF-MEHRSCHICHTFOLIEN ODER -PLATTEN**
DEVICE FOR EXTRUDING MULTILAYER PLASTIC FILMS OR PLATES
DISPOSITIF D'EXTRUSION DE FEUILLES OU DE PLAQUES MULTICOUCHES EN MATIERE PLASTIQUE

(30) Priorität: 01.09.1989 DE 3929002
(43) Veröffentlichungstag der Anmeldung: 21.08.1991
(73) Patentinhaber: Klöckner ER-WE-PA GmbH, 40699 Erkrath (DE)
(72) Erfinder: DJORDJEVIC, Dragan, D-4006 Erkrath (DE); JUNG, Dieter, D-4006 Erkrath 1 (DE)
(74) Vertreter: Röther, Peter, Dipl.-Phys.
(86) Internationale Anmeldenummer: EP9001436
(87) Internationale Veröffentlichungsnummer: WO9103365

(56) Entgegenhaltungen:
- EP-A- 0 197 581
- EP-A- 0 205 157
- EP-A- 0 315 304
- DE-A- 3 010 691
- FR-A- 2 154 579
- GB-A- 2 083 401
- US-A- 3 860 036
- US-A- 3 912 436
- Kunststoffe, Vol.78,No.8, August 1988, Carl Hanser Verlag, (München, DE),"Neuer Verteilerblock für die Co-Extrusion" page A33; see figure (cited in the application)
- Patent Abstracts of Japan, Vol.12, No.113 (M-683)(2960), 9 April 1988,
- Industrial & Production Engineering, Vol.12, No.4, December 1988, Industrial & Production Engineering, (München, DE),P.Reitemeyer:"Coextrusion dies for manufacturing flat films in the field of packaging",pages 22-24 see figures

## Beschreibung

### Vorrichtung zum Extrudieren von Kunststoff-Mehrschichtfolien oder -platten

Die Erfindung betrifft eine Vorrichtung zum Extrudieren von Kunststoff-Mehrschichtfolien oder -platten gemäß den Merkmalen des Oberbegriffs des Hauptanspruchs 1.

Derartige Vorrichtungen sind beispielsweise aus einer Veröffentlichung in "Modern Plastics", Aug. 83, S. 22 - 26 oder auch einer Anzeige in "Kunststoffe", 8/88, S. A33 bekannt. In beiden Fällen ist zwischen mehrere Extruder, die je eine Kunststoffschmelze erzeugen, und den Düsenkörper einer Breitschlitzdüse ein mit mehr oder weniger Aufwand auswechselbarer Feedblock geschaltet, der an seinen Eingängen jeweils eine Kunststoffschmelze aufnimmt und diese über ein System interner Kanäle auf einen als Ausgang dienenden Block mit schlitzartigen Durchführungen leitet, der seinerseits einen Strang geschmolzenen Kunststoffes mit sandwichartiger Schichtstruktur und vorzugsweise rechteckigem Querschnitt abgibt. Dieser Strang wandert dann in einem zumindest teilweise im Düsenkörper verlaufenden Kanal geeigneten Querschnitts und mehr oder weniger großer - konstruktionsbedingter - Länge bis zu einer kleiderbügelartigen Erweiterung der im Düsenkörper verlaufenden Schmelzeleitung, bevor diese den Strang unter Verbreiterung und Abflachung bei gleichzeitiger Aufrechterhaltung der sandwichartigen Schichtstruktur dem schlitzartigen Ausgangsspalt der Breitschlitzdüse - gegebenenfalls nach Zusammenführung mit weiteren Kunststoffschichten - zuführt. Der Feedblock kann dabei von außen zugängliche Mittel zum mechanischen Regeln der Schichtdicken der einzelnen Schichten von Kunststoffschmelzen oder auch des gesamten Stranges im Feedblock aufweisen, beispielsweise über Bolzen oder Stellschrauben zu bewegende Klappen, Staubalken oder Drosselwellen mit nicht rotationssymmetrischem Umfang.

Bei solchen Vorrichtungen erweist es sich als günstig, daß der zugehörige Feedblock einerseits von allen Seiten zugänglich und andererseits mit Mitteln zum Regeln der verschiedenen Schichtdicken der Kunststoffschmelzen versehen ist, weil einerseits grundsätzlich für jede gewünschte Schichtstruktur - sowohl in materieller als auch in anordnungsmäßiger Hinsicht - ein spezieller Feedblock erforderlich und daher ein möglichst einfaches Auswechseln derselben oder zumindest wesentlicher Teile von ihnen äußerst wünschenswert ist und andererseits gewisse Schwankungen der Temperaturen und/oder Viskositäten der einzelnen Kunststoffschmelze-Schichten, die zu Schwankungen in der Schichtstruktur des Endproduktes führen, unvermeidlich sind und mit den vorbeschriebenen Mitteln korrigiert werden können.

Eine solche Korrektur bedarf im Falle der Offenbarungen der vorgenannten Druckschriften allerdings erheblicher Erfahrungen des Bedienungspersonals, da hier die Schichtdicke jeder Kunststoffschmelze-Schicht für sich verändert werden kann, dabei jedoch stets die Nachbarschicht(en) einerseits und demzufolge die gesamte Schichtstruktur andererseits mitbeeinflußt werden, so daß eine eindeutige Korrektur eine sehr genaue Abstimmung aller vorhandenen Korrekturmöglichkeiten erfordert, was mit wachsender Zahl der Schichten immer höhere Anforderungen an die Erfahrungen des Bedienungspersonals stellt. Abgesehen davon, daß mit wachsender Zahl der Schichten die Konstruktion des entsprechenden Feedblocks ständig anspruchsvoller und teurer wird.

Nachteilig wirkt sich bei den beschriebenen Vorrichtungen außerdem aus, daß sie gerade wegen des gut zugänglichen Feedblocks vom Punkt der Zusammenführung der verschiedenen Schichten der Kunststoffschmelze im Feedblock bis zum Eingang in die kleiderbügelartige Erweiterung der Schmelzeleitung im Düsenkörper auf jeden Fall - unabhängig davon, ob der Feedblock direkt oder unter Zwischenschaltung weiterer Leitungselemente mit dem Düsenkörper verbunden ist - einen Kanal merklicher Länge benötigen, da die kleiderbügelartige Erweiterung im Düsenkörper aus Stabilitätsgründen dieses Düsenkörpers nicht unmittelbar bis an eine der nicht den Ausgangsspalt aufweisenden Außenwände dieses Düsenkörpers und damit an die Anschlußstelle der Zuleitung des Stranges der Kunststoffschmelzen vom Feedblock zum Düsenkörper reichen kann. In der Praxis hat sich jedoch herausgestellt, daß keineswegs alle denkbaren Schichtstrukturen von Kunststoffschmelzen in einem solchen Kanal notwendigerweise streng laminar fließen, sondern bereits hier Vermischungen und/oder Verwirbelungen einzelner Paare von Kunststoffschmelzen an der jeweiligen Schichtgrenze auftreten, die sich in der kleiderbügelartigen Erweiterung jedenfalls nicht zurückbilden und ein undefiniertes Endprodukt entstehen lassen, was auch durch von außen vorzunehmende Manipulationen an Mitteln zum Regeln des Schmelzeflusses einzelner oder aller Kunststoffschmelze-Schichten im Feedblock nicht mehr korrigiert werden kann.

Den vorgenannten Nachteil vermeidet eine Düsenanordnung gemäß der US-PS 4 619 802, bei der der Eingangsteil eines Feedblocks durch ortsfeste, im wesentlichen in Fließrichtung der Kunststoffschmelzen angeordnete Bohrungen in der Rückseite des Düsenkörpers ersetzt wird und der verbleibende vordere Teil des Feedblocks senkrecht zur Fließrichtung der Kunststoffschmelzen in eine entsprechende Aussparung des Düsenkörpers eingesetzt wird, wobei dieser auswechselbare Feedblockteil ebenfalls Mittel zum mechanischen Regeln der Schichtdicken der einzelnen Kunststoffschmelze-Schichten besitzt, deren Betätigung sowohl die Nachbarschicht(en) als auch die gesamte Schichtstruktur beeinflußt. Der Vorteil dieser Düsenanordnung liegt darin begründet, daß der Ausgang des auswechselbaren Feedblockteils sehr nahe am Eingang der kleiderbügelartigen Erweiterung der Schmelzeleitung plaziert werden kann, die den geschichteten Schmelzestrom unter Verbreiterung in Richtung parallel zum Düsenmund bei gleichzeitiger Einschnürung in der dazu senkrechten Richtung unter Beibehaltung der Schichtstruktur zum Düsenmund leitet. Nachteilig ist bei dieser Anordnung jedoch, daß sie wegen der verwendeten Mittel zum Regeln der Schichtdicken in Form je einer zwischen den Schichten verdrehbaren Klappe aus den bereits oben genannten Gründen nur für Schichtstrukturen mit sehr wenigen - gemäß der Offenbarung der vorgenannten Druckschrift sogar nur mit zwei - Schichten verwendet werden kann - sofern nicht eine Mehrkanaldüse mit einer oder mehreren der vorgenannten Abwandlungen eines Feedblocks zur Anwendung kommen soll. Darüber hinaus benötigt die vorgenannte Anordnung einen sehr tiefen Düsenkörper, um hinter der kleiderbügelartigen Erweiterung einerseits noch den auswechselbaren Feedblockteil und andererseits die Bohrungen zur Verbindung der Extruder mit dem vorgenannten Feedblockteil durch die Rückwand des Düsenkörpers in letzterem installieren zu können, und schränkt außerdem ganz erheblich die Flexibilität der ursprünglich in den auf S. 1, Abs. 2 zitierten Druckschriften offenbarten Feedblöcke dadurch ein, daß mit den Bohrungen in der Rückseite des Düsenkörpers die Zahl und die Verteilung der Kunststoffschmelzen auf die schlitzartigen Durchführungen im auswechselbaren Feedblockteil weitgehend festgelegt werden, während anderenfalls durch das einfache Auswechseln eines kompletten Feedblocks außerhalb des Düsenkörpers jede mögliche Schichtstruktur mit demselben Düsenkörper erzeugt werden kann.

Die Beschränkung der Zahl der im Feedblock zusammenzuführenden Kunststoffschmelzen aufgrund der verwendeten Mittel zum mechanischen Regeln der Schichtdicken sowohl bei den Gegenständen der auf S. 1, Abs. 2 zitierten Druckschriften als auch beim Gegenstand der vorgenannten US-PS 4 619 802 läßt sich gemäß der Druckschrift "Neue Verpackung" 6/78, S. 842 - 848, insbesondere S. 847, rechte Spalte, durch Verwendung eines Feedblocks vermeiden, der in seinem Ausgangsbereich aus einem kompakten Block mit einer Vielzahl paralleler schlitzartiger Durchführungen besteht, wobei dieser Block einerseits keine Mittel zum mechanischen Regeln der Schichtdicken der einzelnen Kunststoffschmelze-Schichten besitzt und wobei auch mehrere parallele schlitzförmige Durchführungen zur Ausbildung einer einzelnen Kunststoffschmelze-Schicht dienen können, was bekanntermaßen rheologische Vorteile bei der Ausbildung des insgesamt durch den Feedblock ausgebildeten geschichteten Schmelzestroms ergeben kann. Die Erfahrung hat gezeigt, daß sich bei geeigneter Anordnung der schlitzartigen Durchführungen eines solchen Feedblocks für jeden speziellen Fall einer gewünschten Schichtstruktur in Verbindung mit der einfachen Auswechselbarkeit dieses Feedblocks im Weg zwischen Extruder und Düsenkörper die Verwendung zusätzlicher Mittel zum mechanischen Regeln der Schichtdicken der einzelnen Kunststoffschmelze-Schichten jedenfalls für die inneren Schichten erübrigt. Unbefriedigend bleibt hier nur die Ausbildung der beiden äußeren Deckschichten, insbesondere wenn sie sehr dünn sein sollen, da diese nicht nur Ausgleichsvorgängen mit benachbarten Kunststoffschmelze-Schichten, sondern auch solchen mit den Innenwänden der Schmelzeleitung, insbesondere denjenigen von dessen kleiderbügelartiger Erweiterung, unterliegen, was zumindest fallweise eine Nachregelungsmöglichkeit ihrer Ausbildung wünschenswert erscheinen läßt.

Überhaupt nicht berücksichtigt wird im vorgenannten Stand der Technik die Tatsache, daß jede mittels einer Breitschlitzdüse erzeugte Kunststoff-Mehrschichtfolie oder -platte wegen der nach dem Verlassen des Düsenmundes zwangsläufigen Einschnürung von den Seiten her zunächst eine unerwünschte Randverformung aufweist, die üblicherweise durch geeignetes Beschneiden beseitigt wird. Dabei entsteht jedoch ein erheblicher Anfall von Abfall, der sinnvollerweise dem Erzeugungsprozeß der Kunststoff-Mehrschichtfolie oder -platte wieder zugeführt werden sollte, wegen seiner Zusammensetzung aus allen Schichten des zuvor erzeugten Produktes aber im allgemeinen nur mit besonderen Maßnahmen - wie sie beispielsweise in der DE-OS 36 04 004 beschrieben werden - einem geeigneten Recycling-Prozeß unterworfen werden kann.

Der vorliegenden Erfindung liegt daher die Aufgabe zugrunde, die bekannten gattungsgemäßen Vorrichtungen so weiterzuentwickeln, daß bei Aufrechterhaltung der Flexibilität einer gattungsgemäßen Vorrichtung bezüglich der zu erzeugenden Zahl der Schichten und der Variation der entstehenden Schichtstruktur sowie der Erzielung eines möglichst geringen Abstandes zwischen dem Ausgang des Feedblocks und dem Eingang der kleiderbügelartigen Erweiterung der Schmelzeleitung im Düsenkörper mit möglichst einfachen und kostengünstigen Mitteln eine eindeutig definierte Schichtstruktur parallel angeordneter Lagen einer Kunststoff-Mehrschichtfolie oder -platte mit einer beliebigen Zahl von Schichten erzeugt werden kann, wobei außerdem ein einfaches Recycling der bei der Randbeschneidung der aus dem Düsenmund ausgetretenen Produkte anfallenden Abfälle ermöglicht wird.

Die Erfindung erreicht dies mit Hilfe der Merkmale des kennzeichnenden Teils des Hauptanspruchs 1.

Ein besonderer Vorteil dieser Erfindung wird dadurch gegeben, daß der auswechselbare Feedblock aufgrund der Möglichkeit der Auswechslung in Fließrichtung der Kunststoffschmelzen mit einfachen konstruktiven Maßnahmen jedem gängigen Düsenkörper einer Ein- oder auch Mehrkanal-Breitschlitzdüse so angepaßt werden kann, daß sein Ausgang möglichst dicht vor dem Eingang der kleiderbügelartigen Erweiterung der Schmelzeleitung im Düsenkörper angeordnet werden kann, wozu lediglich die vorhandene Schmelzeleitung entsprechend aufgeweitet und eine geeignete einfache mechanische Halterung für den nicht in den Düsenkörper eintauchenden Teil des Feedblocks an der Rückseite des Düsenkörpers anzuschlagen ist. Andererseits bleibt bei dieser Konstruktion in vorteilhafter Weise auch die Flexibilität bezüglich der Austauschbarkeit von Feedblöcken an einem Düsenkörper gegenüber den Gegenständen der auf S. 1, Abs. 2 zitierten Druckschriften voll erhalten. Diese Flexibilität wird vorteilhafterweise noch dadurch erhöht, daß der Block mit schlitzartigen Durchführungen und der Rest des Feedblocks mindestens zwei separate Teilblöcke des Feedblocks darstellen, weil in diesem Fall beispielsweise nur der Block mit schlitzartigen Durchführungen ausgewechselt werden muß, wenn die Schichtstruktur, d.h. die Zahl, Anordnung und jeweilige Schichtdicke, unverändert bleiben soll, ein Wechsel der Ausgangsstoffe jedoch aus rheologischen Gründen eine geänderte Anordnung der schlitzartigen Durchführungen für eine oder mehrere der Kunststoffschmelze-Schichten erforderlich oder zumindest wünschenswert macht.

Ein weiterer Vorteil der vorliegenden Erfindung ist darin begründet, daß sie extern betätigbare Mittel zur Querschnittsvariation der jeweils äußersten der - parallel zum Düsenmund angeordneten - schlitzartigen Durchführungen aufweist, da die Erfahrung gezeigt hat, daß die gegenseitige Beeinflussung des Fließverhaltens der inneren Schichten eines geschichteten Kunststoffschmelzestranges nach einer einmal festgelegten geeigneten Parameterwahl in verhältnismäßig weiten Grenzen unberücksichtigt bleiben kann, die äußersten Schichten jedoch wegen ihrer Wechselwirkung sowohl mit einer schmelzflüssigen Nachbarschicht als auch mit einer Wandfläche des Düsenkörpers größere Unregelmäßigkeiten im Fließverhalten aufweisen können, die eine unmittelbare Nachregelung als sehr wünschenswert erscheinen lassen.

Von ganz besonderem Vorteil ist bei der vorliegenden Erfindung das Anbringen von weiteren schlitzartigen Durchführungen in den dafür vorgesehenen Block, die senkrecht und kreuzungsfrei zu den bereits vorhandenen - parallel zum Düsenmund angeordneten - schlitzartigen Durchführungen verlaufen, weil es damit möglich wird, eine derartige Versiegelung der Kanten der zu erzeugenden Mehrschichtfolien oder -platten vorzunehmen, daß die nach dem Austritt dieser Produkte aus dem Düsenmund normalerweise durchzuführende Randbeschneidung nur Abfälle einer einzigen Kunststoffkomponente erzeugt, die dann ohne besondere Zusatzmaßnahmen in den entsprechenden Extruder der Gesamtvorrichtung zurückgeführt werden können.

In einer vorteilhaften Ausgestaltung der erfindungsgemäßen Vorrichtung wird der den Ausgang des mindestens zweiteilig ausgeführten Feedblocks bildende Block mit schlitzartigen Durchführungen bei zumindest teilweise entferntem Rest des Feedblocks, der die mit Extrudern verbundenen Eingänge und die Verbindungskanäle von diesen Eingängen zu den schlitzartigen Durchführungen enthält, paßförmig in eine einseitig offene Aussparung in der Rückwand des Düsenkörpers - ggf. mit unterstützenden Mitteln zum Einsetzen und/oder Wiederentfernen - eingesetzt und ggf. aus dieser auch wieder entfernt. Als unterstützende Mittel zum Einsetzen und/oder Wiederentfernen können dabei vorteilhafterweise beispielsweise in die nach dem Einsetzen verbleibende freie Oberfläche des Blocks mit den schlitzartigen Durchführungen eingebrachte Gewindebohrungen dienen, die zeitweise Gewindestangen oder -bolzen als Angriffspunkte für hand- oder maschinenbetriebene Greifvorrichtungen zum Bewegen des Blocks mit den schlitzartigen Durchführungen relativ zum Düsenkörper aufnehmen.

In einer weiteren vorteilhaften Ausgestaltung der erfindungsgemäßen Vorrichtung wird der Düsenkörper mit geeigneten speziellen Durchführungen versehen, durch die die extern betätigbaren Mittel am Block der schlitzartigen Durchführungen nach dem Einsetzen dieses Blockes in die entsprechende Aussparung im Düsenkörper mit Manipulatoren im Außenraum des Düsenkörpers in Eingriff gebracht werden, um auf einfache Art und Weise von dort aus das Fließverhalten der äußersten Schichten der zu erzeugenden Mehrschichtfolien oder -platten beeinflussen zu können.

Bei einer anderen vorteilhaften Ausgestaltung der erfindungsgemäßen Vorrichtung wird der ein- oder mehrteilige Feedblock einstückig in eine dreiseitig offene Aussparung des Düsenkörpers eingesetzt oder auch wieder aus dieser entfernt, wobei in diesem Falle zwei Seiten des Feedblocks und insbesondere des darin enthaltenen Blocks mit schlitzartigen Durchführungen derart zugänglich bleiben, daß hier die von außen zugänglichen Mittel zum Steuern des Schmelzeflusses der äußersten Kunststoffschmelze-Schichten unmittelbar im Bereich des Blocks mit den schlitzartigen Durchführungen betätigt werden können. Als derartige Mittel zum Steuern des Schmelzeflusses können vorteilhafterweise beispielsweise parallel zu den schlitzartigen Durchführungen und senkrecht zur Fließrichtung der jeweiligen Kunststoffschmelze-Schicht angeordnete, von Stellschrauben betätigte Staubalken oder von Stellschrauben oder -trieben betätigte Keilgetriebe verwendet werden.

Ausführungsbeispiele der erfindungsgemäßen Vorrichtung sind in der Zeichnung dargestellt.

Es zeigen:
- Fig.: 1: Aufsicht auf den Schnitt durch eine schematische Darstellung einer erfindungsgemäßen Breitschlitzdüse in deren Mittelebene mit teilweise integriertem und teilweise entferntem Feedblock - partiell in durchbrochener Darstellung.
- Fig. 2:: Schnitt A-A aus Fig. 1 nach Ergänzung der erfindungsgemäßen Breitschlitzdüse durch ihren in Fig. 1 oberhalb der Bildebene zu ergänzenden Teil in geändertem Maßstab - teilweise in durchbrochener Darstellung.
- Fig. 3:: Mittelabschnitt des Schnittes B-B aus Fig. 1 nach Ergänzung der erfindungsgemäßen Breitschlitzdüse gemäß Fig. 2 in geändertem Maßstab - gesehen in Richtung des Pfeiles D in Fig. 1.
- Fig. 4:: Mittelabschnitt des Schnittes C-C aus Fig. 1 nach Ergänzung der erfindungsgemäßen Breitschlitzdüse gemäß Fig. 2 im gleichen Maßstab wie Fig. 3 - gesehen in Richtung des Pfeiles E in Fig. 1.
- Fig. 5:: Weitere mögliche Ausführungsform einer erfindungsgemäßen Breitschlitzdüse mit einem im Ganzen integrierten Feedblock in einer der Fig. 1 entsprechenden Darstellung.
- Fig. 6:: Erfindungsgemäße Breitschlitzdüse der Fig. 5 in einer der Fig. 2 entsprechenden Darstellung (Schnitt A-A).
- Fig. 7:: Mittelabschnitt des Schnittes B-B aus Fig. 5 in geändertem Maßstab.
- Fig. 8:: Vergrößerte Darstellung der Fig. 2 mit speziellen Durchführungen vom Außenraum der Düsenkörper zum Block mit schlitzartigen Durchführungen zur Betätigung von Mitteln zum Steuern des Schmelzeflusses der äußersten Kunststoffschmelze-Schichten im vorgenannten Block.

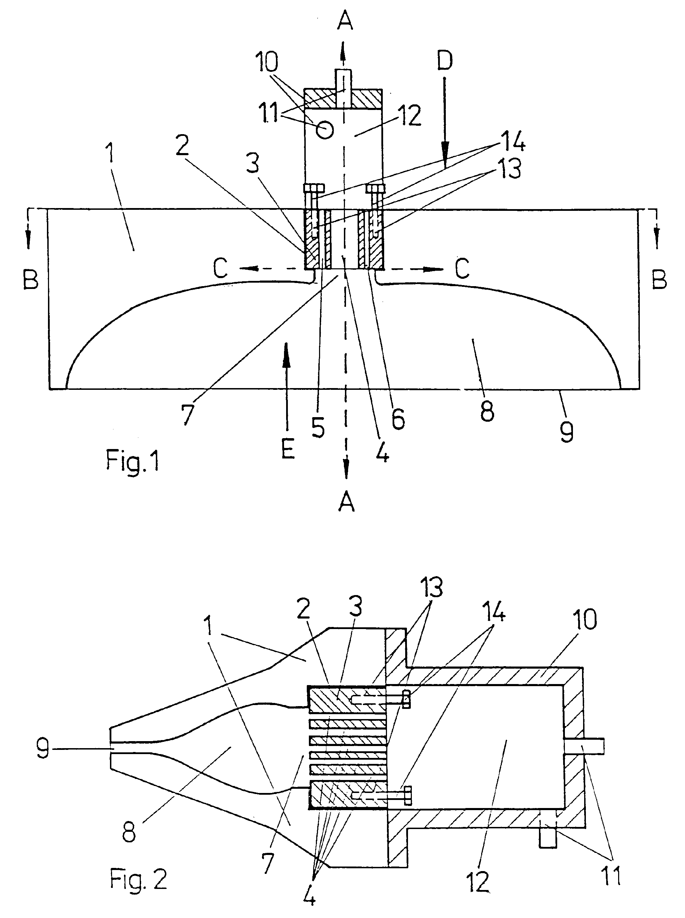

Fig. 1 zeigt in der Aufsicht auf den Schnitt durch eine schematische Darstellung einer erfindungsgemäßen Breitschlitzdüse in deren Mittelebene die untere Hälfte eines zweiteiligen Düsenkörpers 1 mit der Hälfte einer kammerartigen Ausnehmung 2 zur paßförmigen Aufnahme eines zu einem vollständigen Feedblock gehörenden, von diesem separierbaren und hier geschnitten dargestellten Blockes 3 mit schlitzartigen Durchführungen 4, 5, 6, mit einer an diese Ausnehmung 2 anschließenden, hier nur als einseitige Vertiefung dargestellten Schmelzeleitung 7 und mit einer hier ebenfalls nur als einseitige Vertiefung dargestellten kleiderbügelartigen Erweiterung 8 der Schmelzeleitung 7, die in einen schlitzartigen Ausgangsspalt, den Düsenmund 9, ausläuft. An der der Schmelzeleitung 7 abgewandten Seite des Blockes 3 ist am Düsenkörper 1 ein Rahmen 10 in bekannter Art und Weise kraftschlüssig angeschlagen, der einerseits nach der Ergänzung der in Fig. 1 dargestellten Hälfte einer Breitschlitzdüse durch den oberhalb der Bildene der Fig. 1 zu denkenden Teil einer vollständigen Breitschlitzdüse das Herausnehmen des Blockes 3 aus der Ausnehmung 2 nicht verhindert, der andererseits mit Anschlüssen 11 für die Zuleitungen der von hier nicht explizit dargestellten Extrudern gelieferten Kunststoffschmelzen versehen ist und der außerdem im dargestellten Fall einen zweiseitig offenen, paßförmigen Raum 12 für den Einschub des hier als herausgenommenen vorausgesetzten und nicht dargestellten Teiles eines Feedblockes bildet, der in bekannter Art und Weise mittels geeigneter in ihm verlaufender Kanäle die Kunststoffschmelzen von den Extruderanschlüssen 11 zu den schlitzartigen Durchführungen 4, 5, 6 leitet.

Fig. 2 zeigt mit denselben Bezugszeichen dieselbe Vorrichtung wie Fig. 1 in verändertem Maßstab von anderer Seite, aber im selben Zustand, d.h. in dem Moment, in dem ein Feedblock ausgewechselt wird. Der Verbindungsteil des Feedblocks von den Extruderanschlüssen 11 zu den schlitzartigen Durchführungen 4, 5, 6 ist bereits aus dem von einer Seite des Blockes 3 und dem Rahmen 10 aufgespannten Raum 12 entfernt. In den Block 3 sind in Gewindebohrungen 13 kurzzeitig Gewindebolzen 14 eingeschraubt, die als Angriffspunkte für eine hand- oder maschinenbetriebene Greifvorrichtung zum Herausziehen des Blockes 3 aus der Ausnehmung 2 dienen. Nach dem ausreichend weiten Herausziehen des Blockes 3 aus der Ausnehmung 2 wird dieser seitlich aus dem Raum 12 herausgeführt. Anschließend wird ein neuer Block 3 mit Hilfe von Gewindebolzen 14 auf umgekehrtem Wege in die Ausnehmung 2 eingeführt, die Gewindebolzen 14 werden herausgeschraubt und ein neues Verbindungsteil zwischen den Extruderanschlüssen 11 und den schlitzartigen Durchführungen 4, 5, 6 wird zur Vervollständigung des erforderlichen Feedblockes in den Raum 12 eingefügt, wobei die erforderlichen Arretierungsmittel von bekannter Art und daher hier nicht explizit dargestellt sind. Damit kann ein neuer Produktionszyklus zur Erzeugung einer Kunststoff-Mehrschichtfolie oder -platte gestartet werden.

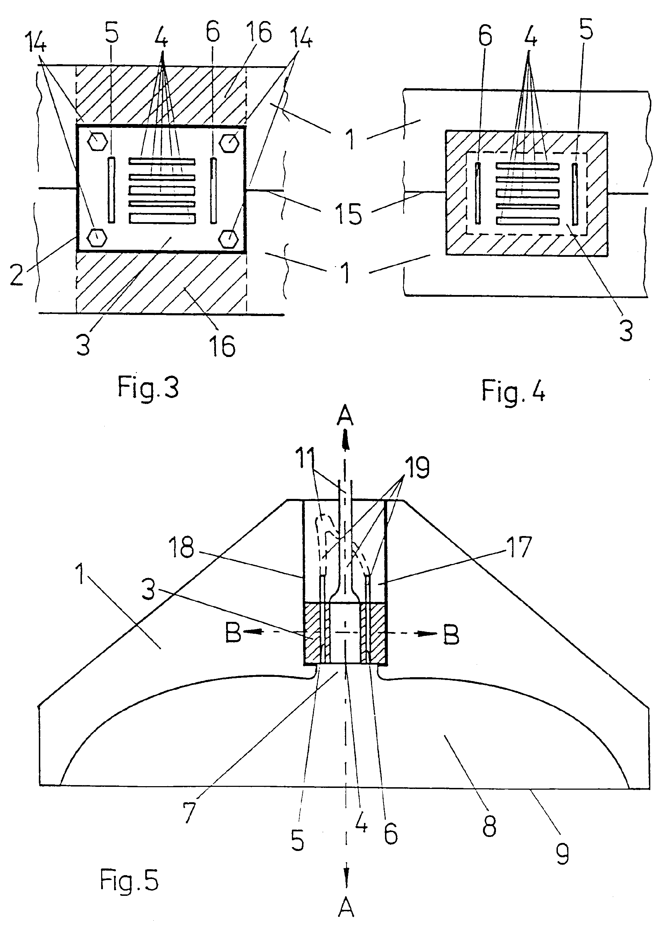

Die Fig. 3 und 4 zeigen die Eingangs- und die Ausgangsseite des Blockes 3 bezüglich der durch ihn hindurchgeführten Kunststoffschmelzen für dieselbe Vorrichtung und im selben Zustand wie in Fig. 2, nur in geändertem Maßstab. In Fig. 3 sind insbesondere die schlitzartigen Durchführungen 4, 5, 6 und die Köpfe der in den Gewindebohrungen 13 verankerten Gewindebolzen 14 sowie zusätzlich die Trennebene 15 der Hälften des Düsenkörpers 1 und die hier nur der Deutlichkeit halber markierten Anschlagflächen 16 des Rahmens 10 am Düsenkörper 1 dargestellt. In Fig. 4 ist demgegenüber insbesondere zu erkennen, daß der um die der Deutlichkeit halber speziell markierte Fläche verringerte, hier unterbrochen eingezeichnete Umfang der Schmelzeleitung 7 deutlich kleiner ist als der durchgezogen dargestellte Umfang des Blockes 3, so daß hier eine eindeutige Anschlagfläche ausgebildet ist. Beide Fig. 3 und 4 offenbaren deutlich einen Satz von schlitzartigen Durchführungen 4, 5, 6, bei dem neben einem Satz von parallelen schlitzartigen Durchführungen 4 zum Erzeugen der gewünschten Schichtstruktur der herzustellenden Kunststoff-Mehrschichtfolie oder - platte jeweils seitlich dieses Satzes je eine senkrecht zu den schlitzartigen Durchführungen 4 angeordnete schlitzartige Durchführung 5, 6 zum Erzeugen einer Kantenversiegelung der herzustellenden Kunststoff-Mehrschichtfolie oder -platte in den Block 3 eingearbeitet ist.

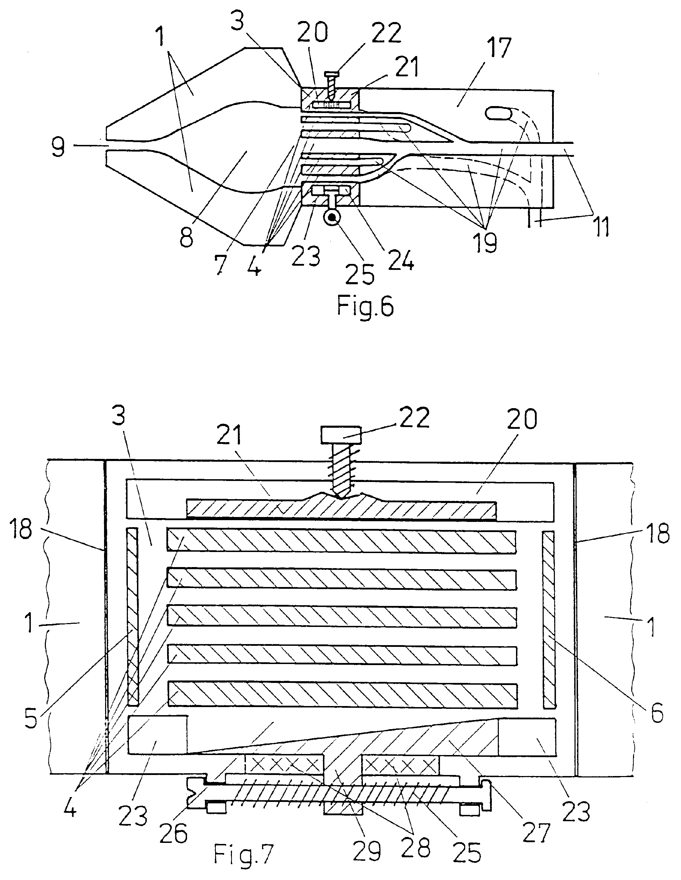

Fig. 5 zeigt in einer der Fig. 1 entsprechenden Darstellung ein anderes mögliches Ausführungsbeispiel einer erfindungsgemäßen Breitschlitzdüse, bei der der Feedblock 17 im Ganzen in den Düsenkörper 1 der Breitschlitzdüse integriert ist. Wesentlicher Unterschied ist hier gegenüber Fig. 1, daß einerseits - wie insbesondere Fig. 6 zu entnehmen ist - die Ausnehmung 18 zur Aufnahme des kompletten Feedblocks 17 von dreiseitig offener schartenartiger Gestalt ist und daß andererseits im vorliegenden Fall auch die die Extruderanschlüsse 11 mit den schlitzartigen Durchführungen 4, 5, 6 verbindenden, im Feedblock 17 verlaufenden Verbindungskanäle 19 zu erkennen sind.

Fig. 6 zeigt die Vorrichtung der Fig. 5 in einer der Fig. 2 entsprechenden Darstellung, wobei einerseits insbesondere - wie bereits vorstehend bei der Erläuterung zu Fig. 5 vermerkt - die dreiseitig offene schartenartige Gestalt der Ausnehmung 18 aus Fig. 5 erkennbar ist, wobei andererseits auch hier die die Extruderanschlüsse 11 mit den schlitzartigen Durchführungen 4, 5, 6 koppelnden, im Feedblock 17 verlaufenden Verbindungskanäle 19 deutlich offenbart sind und wobei außerdem von der Verwendung von von außen zugänglichen Mitteln zum Regeln der Schmelzeströme der äußersten Kunststoffschmelze-Schichten 4 im Block 3 mit den schlitzartigen Durchführungen 4, 5, 6 Gebrauch gemacht wird. Im oberen Randbereich des Blocks 3 mit den schlitzartigen Durchführungen 4, 5, 6 ist in einem der obersten schlitzartigen Durchführung 4 benachbarten Hohlraum 20 ein quer zum Schmelzestrom orientierter Staubalken 21 installiert, der durch die Betätigung einer von außen zugänglichen Stellschraube 22 den Querschnitt der obersten schlitzartigen Durchführung 4 und damit den dort hindurchgehenden Schmelzestrom verändert. Im unteren Randbereich des Blocks 3 ist dagegen - nicht zwingend, sondern aus Gründen einer knappen Offenbarung - in einem entsprechenden Hohlraum 23 ein Keilgetriebe 24 installiert, das bei Betätigung eines parallel zu ihm orientierten Stelltriebes 25 über eine starre Kupplung (Mitnehmer 29) durch einen Schlitz 28 im Block 3 hindurch den Querschnitt der untersten schlitzartigen Durchführung 4 und damit den dort hindurchgehenden Schmelzestrom verändert.

Die Konstruktion der vorgenannten Mittel zum Regeln des Schmelzestromes in den äußersten schlitzartigen Durchführungen 4 im Block 3 ist in der Fig. 7 noch einmal in vergrößertem Maßstab und von anderer Seite dargestellt. Dabei ist insbesondere eine mögliche Ausführungsform eines Keilgetriebes 24 explizit dargestellt, das aus einem quer zur Fließrichtung der Kunststoffschmelze-Ströme angeordneten, fest mit dem Block 3 verbundenen Keil 26 und einem in gleicher Richtung, aber mit entgegengesetztem Anstieg im Hohlraum 23 verfahrbaren Keil 27 besteht, wobei der Antrieb des verfahrbaren Keils 27 im dargestellten Fall durch einen außerhalb des Blocks 3 quer zur Fließrichtung der Kunststoffschmelze-Ströme angeordneten Stelltrieb 25 in Form eines Spindeltriebes und die Kopplung des verfahrbaren Keils 27 mit dem Stelltrieb 25 über einen starren, mit einer Gewindebohrung für die Spindel des Stelltriebes 25 versehenen, durch einen Schlitz 28 im Block 3 hindurchgreifenden und kraftschlüssig mit dem Keil 27 verbundenen Mitnehmer 29 erfolgt.

Das Auswechseln eines Feedblockes 17 an der in den Fig. 5 bis 7 dargestellten Vorrichtung erfordert lediglich die Verwendung geeigneter Extruderanschlüsse und Arretierungsmittel bekannter Art, die hier nicht explizit dargestellt sind.

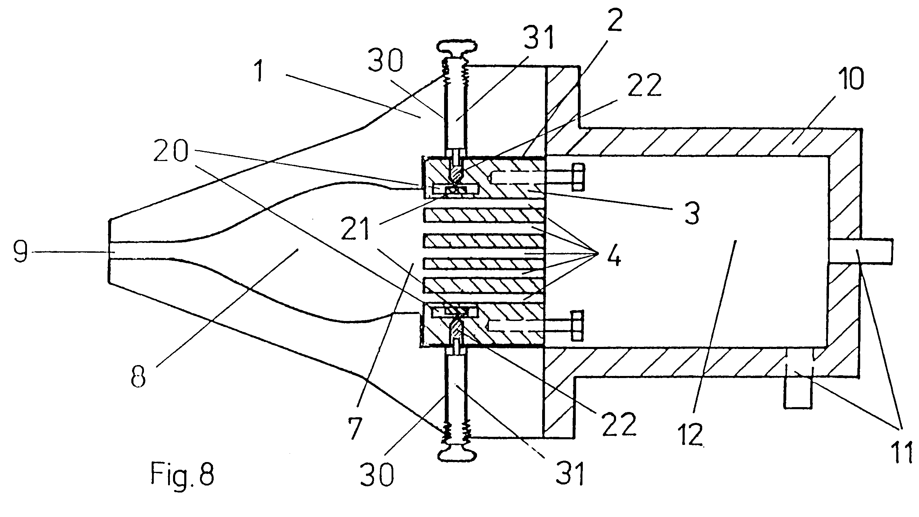

Fig. 8 zeigt eine vergrößerte Darstellung der Fig. 2 mit speziellen Durchführungen 30 im Düsenkörper 1 zur Aufnahme von Kopplungsvorrichtungen 31 zur Betätigung der am Block 3 der schlitzartigen Durchführungen 4, 5, 6 installierten Mittel 20 - 22 zur Steuerung des Durchflusses der äußersten Kunststoffschmelze-Schichten 4 durch den Block 3 vom Außenraum des Düsenkörpers 1 aus.

### Bezugszeichenliste

- 1: Düsenkörper
- 2, 18: Ausnehmungen
- 3: Block
- 4, 5, 6: schlitzartige Durchführungen
- 7: Schmelzeleitung
- 8: kleiderbügelartige Erweiterung
- 9: Düsenmund
- 10: Rahmen
- 11: Extruderanschlüsse
- 12: Raum für einen Teil eines Feedblockes
- 13: Gewindebohrungen
- 14: Gewindebolzen
- 15: Trennebene der Düsenkörperhälften
- 16: Anschlagflächen
- 17: Feedblock
- 19: Verbindungskanäle
- 20, 23: Hohlräume
- 21: Staubalken
- 22: Stellschraube
- 24: Keilgetriebe
- 25: Stelltrieb
- 26, 27: Keile
- 28: Schlitz
- 29: Mitnehmer
- 30: Durchführungen
- 31: Kopplungsvorrichtungen

## Patentansprüche

1. Vorrichtung zum Extrudieren von Kunststoff-Mehrschichtfolien oder -platten, bestehend aus mindestens zwei Extrudern zum Erzeugen verschiedener Kunststoffschmelzen, einem auswechselbaren Feedblock (17), dessen Eingänge (11) von den Extrudern mit jeweils einer Kunststoffschmelze gespeist werden und der die Kunststoffschmelzen von seinen Eingängen auf eine, seinen Ausgang bildenden Block (3) mit schlitzartigen Duchführungen leitet (4,5,6), und einem Düsenkörper (1), in dem der aus dem vorgenannten Block (3) mit einer sandwichartigen Schichtstruktur austretende Stang aus Kunststoffschmelzen mittels einer kleiderbügelartigen Erweiterung (8) der in ihm verlaufenden Schmelzeleitung unter Beibehaltung der Schichtstruktur dem schlitzartigen Ausgangsspalt (9) einer Breitschlitzdüse zugeführt wird, wobei der Feedblock (17) zumindest teilweise derart in den Düsenkörper (1) integriert ist, daß die Schmelzeleitung zwischen Ausgang des Feedblocks (17) und Eingang der kleiderbügelartigen Erweiterung (8) möglichst kurz ist,
dadurch gekennzeichnet,
daß der Block (3) mit schlitzartigen Durchführungen (4, 5, 6) einen separaten Teilblock des gesamten Feedblocks (17 darstellt,
der sowohl einzeln als auch als Bestandteil des gesamten Feedblocks (17) innerhalb der Gesamtvorrichtung auswechselbar gestaltet ist, wobei das Ein- und Ausführen des Blocks (3) in den bzw. aus dem Düsenkörper (1) im wesentlichen parallel zur Fließrichtung der Kunststoffschmelzen erfolgt,
der neben einer Mehrzahl parallel zum schlitzartigen Ausgangsspalt (9) der Breitschlitzdüse, d.h. ihrem Düsenmund (9), ausgerichteter und im wesentlichen in ihren Querschnittsabmessungen unveränderlicher schlitzartiger Durchführungen (4) weitere, senkrecht und kreuzungsfrei zu den vorgenannten Durchführungen (4) angeordnete schlitzartige Durchführungen (5, 6) aufweist und
der extern betätigbare Mittel (20 - 29) zur Querschnittsvariation der jeweils äußersten der vorgenannten Durchführungen (4) besitzt.

2. Vorrichtung zum Extrudieren von Kunststoff-Mehrschichtfolien oder -platten nach Anspruch 1,
dadurch gekennzeichnet,
daß der Block (3) mit den schlitzartigen Durchführungen (4, 5, 6) bei zumindest teilweise entferntem Rest des Feedblocks (17) paßförmig in eine einseitig offene Aussparung (2) des Düsenkörpers (1) einsetzbar und aus dieser auch wieder entfernbar ist.

3. Vorrichtung zum Extrudieren von Kunststoff-Mehrschichtfolien oder -platten nach Anspruch 2,
dadurch gekennzeichnet,
daß der als separater Teilblock ausgebildete Block (3) mit den schlitzartigen Durchführungen (4, 5, 6) mit Mitteln versehen ist, die sowohl das Einsetzen als auch das Wiederentfernen dieses Blocks (3) in die bzw. aus der einseitig offene(n) Aussparung (2) des Düsenkörpers (1) unterstützen.

4. Vorrichtung zum Extrudieren von Kunststoff-Mehrschichtfolien oder -platten nach Anspruch 3,
dadurch gekennzeichnet,
daß die Mittel zum Unterstützen des Einsetzens oder des Wiederentfernens des separaten Blocks (3) mit den schlitzartigen Durchführungen (4, 5, 6) in die bzw. aus der einseitig offene(n) Aussparung (2) des Düsenkörpers (1) Gewindebohrungen (13) in die nach dem Einsetzen verbleibende frei zugängliche Oberfläche des Blocks (3) mit den schlitzartigen Durchführungen (4, 5, 6) sind, die zur zeitweiligen Aufnahme von Gewindestäben oder Gewindebolzen (14) als Angriffspunkten für hand- oder maschinenbetriebene Greifvorrichtungen zum Bewegen des Blocks (3) mit den schlitzartigen Durchführungen (4, 5, 6) relativ zum Düsenkörper (1) dienen.

5. Vorrichtung zum Extrudieren von Kunststoff-Mehrschichtfolien oder -platten nach einem der vorangegangenen Ansprüche 1 bis 4,
dadurch gekennzeichnet,
daß der Düsenkörper (1) spezielle Durchführungen (30) für extern betätigbare Mittel (20 - 22) zur Querschnittsvariation der jeweils äußersten der vorgenannten Durchführungen (4) aufweist.

6. Vorrichtung zum Extrudieren von Kunststoff-Mehrschichtfolien oder -platten nach Anspruch 1,
dadurch gekennzeichnet,
daß der gesamte Feedblock (17) paßförmig in eine dreiseitig offene Aussparung (18) des Düsenkörpers (1) einsetzbar und aus dieser auch wieder entfernbar ist.

7. Vorrichtung zum Extrudieren von Kunststoff-Mehrschichtfolien oder -platten nach einem der vorangegangenen Ansprüche 1 - 6,
dadurch gekennzeichnet,
daß die Mittel zur Querschnittsvariation der jeweils äußersten der vorgenannten Durchführungen (4) auf parallel zu den schlitzartigen Durchführungen (4) und quer zur Fließrichtung der Kunststoffschmelze-Schichten angeordnete Staubalken (21) wirkende Stellschrauben (22) sind.

8. Vorrichtung zum Extrudieren von Kunststoff-Mehrschichtfolien oder -platten nach einem der vorangegangenen Ansprüche 1 - 6,
dadurch gekennzeichnet,
daß die Mittel zur Querschnittsvariation der jeweils außersten der vorgenannten Durchführungen (4) auf parallel zu den schlitzartigen Durchführungen (4) und quer zur Fließrichtung der Kunststoffschmelze-Schichten angeordnete Keilgetriebe (24) wirkende Stellschrauben oder -triebe (25) sind.

## Claims

1. Apparatus for extruding multi-layer plastics films or plates, comprising at least two extruders for producing different plastics melts, an exchangeable feed block (17) whereof the inlets (11) are each fed with a plastics melt by the extruders and which guides the plastics melts from its inlets to a block (3) forming its outlet and having slot-type passageways (4, 5, 6), and a die body (1) in which the extrudate of plastics melts emerging from the said block (3) and having a sandwich-type layer structure is supplied by means of a coathanger-type widened section (8) of the melt line running therein, while maintaining the layer structure, to the slot-type outlet gap (9) of a broad-slot die, the feed block (17) being at least partially integrated in the die body (1) such that the melt line between the outlet of the feed block (17) and the inlet of the coathanger-type widened section (8) is as short as possible, characterized in that the block (3) having slot-type passageways (4, 5, 6) represents a separate part block of the overall feed block (17), this part block being formed to be replaceable both individually and also as a component of the overall feed block (17) within the overall apparatus, the block (3) being introduced into and removed from the die body (1) substantially parallel to the direction of flow of the plastics melts, this part block having, in addition to a plurality of slot-type passageways (4) which are aligned parallel to the slot-type outlet gap (9) of the broad-slot die, that is to say parallel to its die mouth (9), and which are substantially invariable in their cross-sectional dimensions, further slot-type passageways (5, 6) which are arranged perpendicular to and without intersecting the said passageways (4), and the part block possessing externally actuable means (20 - 29) for varying the cross-section of the respectively outermost of the said passageways (4).

2. Apparatus for extruding multi-layer plastics films or plates according to Claim 1, characterized in that the block (3) having the slot-type passageways (4, 5, 6) can be introduced fittingly into a recess (2) of the die body (1) open on one side when the rest of the feed block (17) is at least partially removed, and can also be removed therefrom again.

3. Apparatus for extruding multi-layer plastics films or plates according to Claim 2, characterized in that the block (3) which is constructed as a separate part block and has the slot-type passageways (4, 5, 6) is provided with means which assist both the introduction of this block (3) into and also the re-removal of this block (3) from the recess (2) of the die body (1) which is open on one side.

4. Apparatus for extruding multi-layer plastics films or plates according to Claim 3, characterized in that the means for assisting the introduction or re-removal of the separate block (3) having the slot-type passageways (4, 5, 6) into or from the recess (2) of the die body (1) open on one side are threaded bores (13) in the freely accessible surface of the block (3) having the slot-type passageways (4, 5, 6) which is left after introduction, these threaded bores (13) serving to temporarily receive threaded rods or threaded pins (14) as action points for manually or machine operated gripping apparatus for moving the block (3) having the slot-type passageways (4, 5, 6) relative to the die body (1).

5. Apparatus for extruding multi-layer plastics films or plates according to one of the preceding Claims 1 to 4, characterized in that the die body (1) has special passageways (30) for externally actuable means (20 - 22) for cross-sectional variation of the respectively outermost of the said passageways (4).

6. Apparatus for extruding multi-layer plastics films or plates according to Claim 1, characterized in that the overall feed block (17) can be introduced fittingly into a recess (18) of the die body (1) which is open on three sides and can also be removed therefrom again.

7. Apparatus for extruding multi-layer plastics films or plates according to one of the preceding Claims 1 - 6, characterized in that the means for cross-sectional variation of the respectively outermost of the said passageways (4) are setscrews (22) acting on restricting bars (21) which are arranged parallel to the slot-type passageways (4) and transversely to the direction of flow of the plastics melt layers.

8. Apparatus for extruding multi-layer plastics films or plates according to one of the preceding Claims 1 - 6, characterized in that the means for cross-sectional variation of the respectively outermost said passageways (4) are setscrews or tangent screws (25) acting on wedge gears (24) arranged parallel to the slot-type passageways (4) and transversely to the direction of flow of the plastics melt layers.

## Revendications

1. Dispositif d'extrusion de feuilles ou de plaques multicouches en matière plastique, comprenant au moins deux extrudeuses pour la production de matières plastiques à l'état fondu, un bloc d'alimentation (17) dont les entrées (11) sont alimentées par les extrudeuses avec respectivement une matière plastique à l'état fondu et qui conduit les matières plastiques à l'état fondu de ses entrées vers un bloc (3) qui forme sa sortie et est muni de traversées en forme de fentes (4, 5, 6), et un corps de buse (1) dans lequel le boudin de matières plastiques à l'état fondu qui sort dudit bloc (3) avec une structure de couches en sandwich est amené au moyen d'un élargissement (8) en forme de cintre de la conduite de matière à l'état fondu s'étendant à l'intérieur de celui-ci, avec conservation de la structure de couches, à la fente de sortie (9) en forme de fente d'une buse plate, le bloc d'alimentation (17) étant au moins en partie intégré dans le corps de buse (1) de manière que la conduite de matière à l'état fondu entre la sortie du bloc d'alimentation (17) et l'entrée de l'élargissement (8) en forme de cintre est aussi courte que possible, **caractérisé en ce** que le bloc (3) avec les traversées (4, 5, 6) en forme de fentes constitue un bloc partiel séparé de l'ensemble du bloc d'alimentation (17) qui, individuellement ou aussi en tant qu'élément constituant de l'ensemble du bloc d'alimentation (17), est conformé de façon interchangeable dans l'ensemble du dispositif, l'introduction et le retrait du bloc (3) dans le et respectivement du corps de buse (1) s'effectuant sensiblement parallèlement à la direction d'écoulement des matières plastiques à l'état fondu, lequel comporte, en plus d'une pluralité de traversées (4) orientées parallèlement à la fente de sortie (9) de la buse plate, c'est-à-dire à l'embouchure de la buse (9), et dont les dimensions de la section transversales sont sensiblement invariables, des traversées supplémentaires (5, 6) en forme de fentes disposées perpendiculairement et sans croisement par rapport aux traversées (4) précitées, et est équipé de moyens (20 à 29) pouvant être actionnés par l'extérieur pour varier la section transversale de ladite traversée (4) située respectivement le plus à l'extérieur.

2. Disposition d'extrusion de feuilles ou de plaques multicouches en matière plastique selon la revendication 1, caractérisé en ce que, lorsque le reste du bloc d'alimentation (17) est enlevé au moins en partie, le bloc (3) avec les traversées (4, 5,6) en forme de fentes peut être inséré de manière ajustée dans un évidement (2) ouvert d'un seul côté du corps de buse (1) et retiré de celui-ci.

3. Dispositif d'extrusion de feuilles ou de plaques multicouches en matière plastique selon la revendication 2, caractérisé en ce que le bloc (3) avec les traversées (4, 5, 6) en forme de fentes conformé en bloc partiel séparé est muni de moyens qui facilitent aussi bien l'insertion dudit bloc (3) dans l'évidement (2) ouvert d'un seul côté du corps de buse (1) que le retrait dudit bloc de cet évidement.

4. Dispositif d'extrusion de feuilles ou de plaques multicouches en matière plastique selon la revendication 3, caractérisé en ce que les moyens pour faciliter l'insertion ou le retrait du bloc (3) séparé, avec les traversées (4, 5, 6) en forme de fentes, dans ou de l'évidement (2) ouvert d'un seul côté du corps de buse (1) sont constitués par des taraudages (13) dans la surface du bloc (3) avec les traversées (4, 5, 6) en forme de fentes qui reste accessible après l'insertion, et servent à recevoir temporairement des tiges ou boulons filetés (14) lesquels constituent des points d'attaque pour des dispositifs de préhension à commande manuelle ou mécanique pour déplacer le bloc (3) avec les traversées (4, 5, 6) en forme de fentes par rapport au corps de buse (1).

5. Dispositif d'extrusion de feuilles ou de plaques multicouches en matière plastique selon l'une des revendications 1 à 4, caractérisé en ce que le corps de buse (1) comporte des traversées (30) spéciales pour des moyens (20 à 22) pouvant être actionnés de l'extérieur pour varier la section transversale de ladite traversée (4) située respectivement le plus à l'extérieur.

6. Dispositif d'extrusion de feuilles ou de plaques multicouches en matière plastique selon la revendication 1, caractérisé en ce que l'ensemble du bloc d'alimentation (17) peut être inséré de manière ajustée dans un évidement (18) ouvert sur trois côtés du corps de buse (1) et également retiré de celui-ci.

7. Dispositif d'extrusion de feuilles ou de plaques multicouches en matière plastique selon l'une des revendications 1 à 6, caractérisé en ce que les moyens pour la variation de la section transversale de ladite traversée (4) située respectivement le plus à l'extérieur sont constitués par des vis de réglage (22) qui agissent sur des barres de retenue (21) disposées parallèlement aux traversées (4) en forme de fentes et transversalement par rapport à la direction d'écoulement des couches de matière plastique à l'état fondu.

8. Dispositif d'extrusion de feuilles ou de plaques multicouches en matière plastique selon l'une des revendications 1 à 6, caractérisé en ce que les moyens pour la variation de la section transversale de ladite traversée (4) située respectivement le plus à l'extérieur sont constitués par des vis de réglage ou des servomoteurs (25) qui agissent sur des mécanismes à clavette (24) disposés parallèlement aux traversées (4) en forme de fentes et transversalement par rapport à la direction d'écoulement des couches de matière plastique à l'état fondu.
